# EUROPEAN PATENT APPLICATION

(11) **EP 2 129 056 A1**
(43) Date of publication of application: **02.12.2009**
(21) Application number: 07859865.3
(22) Date of filing: 19.12.2007
(51) Int. Cl.: H04L 12/56

(54) **COMMUNICATION METHOD, COMMUNICATION SYSTEM, HOME AGENT, AND MOBILE NODE**

(30) Priority: 26.12.2006 JP 2006348953; 06.09.2007 JP 2007231737
(71) Applicant: Panasonic Corporation, Kadoma-shi Osaka 571-8501 (JP)
(72) Inventor: HIRANO, Jun c/o Panasonic Corporation, IPROC, Chuo-ku, Osaka 540-6207 (JP); JEYATHARAN, Mohana Dhamayanthi c/o Panasonic Labs.Pte.ltd., Tai Seng Ind. Est., Singapore 534415 (SG); NG, Chan Wah c/o Panasonic Singapore Labs.Pte.Ltd., Tai Seng Ind. Est., Singapore 534415 (SG); TAN, Pek Yew c/o Panasonic Singapore Labs. Pte.Ltd., Tai Seng Ind.Est., Singapore 534415 (SG)
(74) Representative: Grünecker, Kinkeldey, Stockmair & Schwanhäusser Anwaltssozietät
(86) International application number: PCT/JP2007/074467
(87) International publication number: WO 2008/078632

(57) **Abstract**

The present invention provides a technique to prevent the generation of a large number of binding update messages in an overlay network when a mobile node changes connection points. According to this technique, in a communication system where a home agent HA 1210 for holding BCE (Binding Cache Entry) of a mobile node MN 1220 and a plurality of proxy home agents pHA 1212, pHA 1214 and pHA 1216 each capable to operate as a proxy of HA 1210 are overlaid on a global communication network 1200, and BCE of MN 1220 held by HA 1210 is delegated to pHA 1214 where MN 1220 is connected. Further, when MN 1220 is re-connected to pHA 1216 of move destination different from pHA 114 of move source, BCE of MN 1220 delegated to pHA 1214 of move source is re-delegated to pHA 1216 of move destination.

## Description

### TECHNICAL FIELD

The present invention relates to the field of communication in a packet exchange data communication network. In particular, the invention relates to a packet routing of a mobile node and a home agent.
Further, the present invention relates to a communication method, a communication system, a home agent, and a mobile node where a first home agent, being arranged in a home domain and holding binding cache entry of the mobile node, and a plurality of second home agents, each capable to operate as a proxy of the first home agent, are overlaid on an existing network.

### BACKGROUND ART

In recent years, a large number of devices are operated to perform communication with each other using the Internet Protocol (IP). Also, for the purpose of providing mobility support to mobile devices, IETF (Internet Engineering Task Force) is developing Mobility Support in IPv6 (MIPv6) (see the Non-Patent Document 1 as given below). In MIPv6, each mobile node has a permanent home domain. When a mobile node is connected to a home network, a primary global address called "home address" (HoA) is assigned. When a mobile node is separated from the home network, i.e. when it is connected to other external network, a temporary global address known as a "care-of address" (CoA) is assigned. In general concept of the mobility support, even when a mobile node is connected to the other external network, a packet destined to its home address can reach the mobile node. This can be accomplished by introducing an entity known as "home agent" (HA) in the home network as seen in the Non-Patent Document 1.

A mobile node registers its care-of address by using a message, which is known as a "binding update message" (BU). As a result, the home agent can generate an association between the home address and the care-of address of the mobile node. The home agent intercepts a message of the mobile node to the home address, encapsulates it in a packet, and transfers the packet to the care-of address of the mobile node (i.e. a packet is placed in a payload of a new packet. This is known as "packet tunneling".).

When the number of radio (wireless) devices is rapidly increased, it can be predicted that a new mobility technique may emerge. Above all, in network mobility (NEMO), the entire network, to which a node belongs, changes the connection point. When the concept of the mobility support for each individual host is extended to network mobility support, no matter where on Internet the mobile network may be connected, the role of the network in moving lies in that a mechanism can be provided, by which a node in the mobile network can be reached by using its primary global address.

IETF proposes a solution for network mobility as disclosed in the Non-Patent Document 2 and the Patent Document 1 as given below. It is disclosed here that, when a mobile router (MR) transmits a BU to a home agent, a network prefix used by the node in the mobile network is described in the BU. It is also described that it is placed into the BU by using a special option, which is known as the Network Prefix Option. As a result, the home agent can build up a routing table on prefix base and can transfer a packet transmitted to a destination, which has the prefixes based on this table, and it is transferred to care-of address of the mobile router.

In the Non-Patent Document 1, discussion is made on global mobility support for mobile node. Also, route optimization (RO) to use the procedure of return routability (RR) between a mobile node and a correspondent node (CN) is disclosed. In Non-Patent Document 2, discussions are made on network mobility support, which gives no special attention on the route optimization. In both of these documents, no special concern is shown on home network model for mobile node.

In the Non-Patent Document 3 as given below, a method is described, in which a load in MIPv6 is transferred from a home agent to a home agent for the purpose of equilibrating a load in MIPv6. In this method, processing is primarily performed at home agent. Specifically, it is a method to equilibrate a load between a plurality of home agents within home link according to the number of packets tunnelized. This equilibration of the load is more preferably realized by a plurality of home agents with duplicated information rather than by a home agent server, which divides and controls information relating to the mobile node. The method by the home agent server, which divides and controls, is used on normal MIPv6. In this case, home link of a mobile node has a multiple of home agents, and the mobile node selects one of the home agents depending on the number of the advertized and preferred home agents. The home agent can achieve static load equilibration by changing the preferred level when router advertisement (RA) is transmitted.

In the method by duplication, the mobile node selects home agent at random when it wants to start registration, but the home agent under control is not fixed during the period when the registration is effective. When new registration is received, the home agent sends binding information to all home agents within home link. Then, after a certain period of time or after several packets or after packets of threshold, the control is transferred to another adequate home agent. Then, the new home agent controls the packet destined to the mobile node in BCE (Binding Cache Entry) and serves as a proxy for the mobile host. According to this method, therefore, the purpose of the shifting of BCE from a home agent to a home agent is basically to equilibrate the load, and the mobile host can recognize the shifting of BCE.

The Non-Patent Document 4 as given below proposes a protocol, according to which the load is equilibrated between the home agents in the same home link.
When failure of the home agent is detected, it is switched over to a new home agent. This protocol does not depend on router advertisement (RA) to prepare a list of home agents but uses a hello message in the home link. Each mobile node or mobile router carries out DHAAD (Dynamic Home Agent Discovery) and finds out an adequate home agent. This home agent is called a primary home agent. After the mobile node has registered the binding at this primary home agent, the primary home agent sends a binding cache entry to another home agent in the home link. When the home agent of the home link sends a proxy message for mobile prefix, this is used to tunnelize the data packet to the current care-of address of the mobile node and this equilibrates the load.

In addition, when failure occurs at the primary home agent or for the purpose of load equilibration, the primary home agent is switched over by a backup node. In case of the failure, the backup node sends a request for switching, or the primary home agent sends a request for switching to the mobile node for load equilibration. However, this method is used for the purpose of load equilibration and for the discovery of failure at the home agent, and this is not for route optimization by the mobile home agent.

In the Non-Patent Document 5 as given below, a dispersed home network model is used for the following three purposes: redundancy of home agents, load sharing between home agents, and route optimization. This method is particularly useful for the route optimization of NEMO. In this method, one primary home agent is selected from the dispersed home network. In this case, the dispersed home agent has the same anycast address, and by the anycast message, the closest home agent is selected as the primary home agent.

In this protocol, also, a home agent BCE transfer mechanism similar to the one described in the Non-Patent Document 4 is used. According to this method, when a mobile router moves to a new link, the mobile router can obtain a new home agent closer to it by carrying out DHAAD, and it is especially effective to solve the problem of the home agent, which is moving. In this case, there are a multiple number of signalings such as hello messages between home agents or binding synchronization messages, etc. According to the Non-Patent Document 4, when a home agent in a home domain moves, a correspondent node closer to the home domain cannot find out an adequate home agent in the home domain and cannot send data to the mobile node. Therefore, it is preferable that the home agent in the home domain has BCE of the mobile node at all times. Also, according to this method, when the home agent moves, very complicated procedure is needed to update BCE of all home agents, which belong to the dispersed home network. If possible, therefore, it is desirable to find a home agent, which is at the standstill.

In the Non-Patent Document 6 as given below, a method similar to that of the Non-Patent Document 5 is discussed except the following points: In the Non-Patent Document 6, a proxy MIP is introduced for local mobility management and route optimization. In addition, a dispersed home network model is used. When the home agents in this dispersed home network model are separated from the home network, the home agents exchange BCE with each other, and all home agents belonging to different home network models maintain tunnels between the home agents. The tunnel can be maintained by a certain routing protocol. This is a method to reinforce the Non-Patent Document 5 and to achieve route optimization during communication from MR to MR.

According to the Patent Documents 2 and 3, delegation of BCE from a home agent to a home agent is made for load equilibration, and there are one primary home agent and several secondary home agents. When the load on the primary home agent is increased, the primary home agent delegates a right to transfer transparently to a secondary home agent without causing the mobile node to become conscious. However, the primary home agent still controls the mobile node, and all binding messages are transmitted by the primary home agent and are processed. The secondary home agent merely serves as a proxy of the mobile node or a mobile router and intercepts a packet destined to the mobile node. Further, when a packet destined to a mobile network node (MNN), i.e. destined to a mobile node, is tunnelized, the secondary home agent uses address of the primary home agent as a source address of the tunnel.

Further, in order to increase the reliability of the home agent, conventional examples to copy the functions of a home agent on other node on the same home are disclosed in the Patent Documents 5 and 6. Also, a method to transfer a mobile anchor point (MAP) in hierarchical mobile IPv6 functions is described in the Patent Document 4. In this case, when MAP detects a state of congestion, it can transfer binding information of the mobile node to another MAP.

Also, in the Patent Documents 7 and 8 as given below, a method is disclosed, according to which information relating to a mobile node is transferred between RAN's (Radio Access Networks) when a handover is performed from a certain RAN to the other RAN with the mobile node connected to the same core network.

The Patent Document 9 discloses a method, according to which a proxy home agent takes over the functions as an anchor point to the mobile node. In this Patent Document 9, the handover is performed according to a metric assigned to each proxy based on the relative distance from the mobile node. In this case, the proxy home agent, which has the best metric, is selected. The Patent Documents 7 - 9 are the documents, which were not made public at the time of the basic filing of the present application.
Patent Document 1: Leung, K. K., "Mobile IP mobile router", US Patent 6,636,498, Oct 2003.
Patent Document 2: Haverinen, Henry, "Load balancing in telecommunications system supporting mobile IP", EP 1 134991 B1, 23 June 2004.
Patent Document 3: Hirashima et. al., "Home Agent, Mobile Communications System, and Load Dispersing Method", US Patent Application 2005/0207382A1, Sep 2005.
Patent Document 4: Takeyoshi et. al., "Load Decentralization Method and Apparatus thereof", US Patent Application 2005/0207394A1, Sep 2005.
Patent Document 5: Akita et. al., "Home Agent Duplication Method and Home Agent Duplication Apparatus", US Patent Application 2005/0207429A1, Sep 2005.
Patent Document 6: Watanabe, "Routing System", US Patent Application 2004/0066749A1, Apr 2004.
Patent Document 7: Bae, et. al., "Method and apparatus for performing handover between core network entities in a packet-switched network", European Patent Application EP1744582A1, Jan 2007.
Patent Document 8: Bae, et. al., "Method and apparatus for performing handover between core network entities in a packet-switched network", European Patent Application EP1746856A1, Jan 2007.
Patent Document 9: Hirano, et. al., "Mobile terminal managing device, mobile terminal and communications system", European Patent Application EP1753181A1, Feb 2007.
Non-patent Document 1: Johnson, D. B., Perkins, C. E., and Arkko, J., "Mobility Support in IPv6", Internet Engineering Task Force (IETF) Request For Comments (RFC)3775, June 2004.
Non-patent Document 2: Devarapalli, V., et. al., "NEMO Basic Support Protocol", Internet Engineering Task Force (IETF) Request For Comments (RFC) 3963, January 2005.
Non-patent Document 3: Jason P. Jue and Dipak Ghosal, "Design and Analysis of replicated Servers to Support IP-Host Mobility in Enterprise Networks", Communications, 1997, pgs 1256-1260.
Non-patent Document 4: Devarapalli, V., Wakikawa, R., and Thubert, P., "Local HA to HA protocol", IETF Internet Draft: draft-devarapalli-mip6-nemo-local-haha-00.txt, Work-In-Progress, July 1, 2005.
Non-patent Document 5: Wakikawa, R., Devarapalli, V., and Thubert, P., "Inter Home Agents Protocol (HAHA)", IETF Internet Draft: draft-wakikawa-mip6-nemo-haha-01.txt, 16 Feb 2004.
Non-patent Document 6: Thubert, P., Wakikawa, R., and Devarapalli, V., "Global HA to HA protocol", IETF Internet Draft: draft-thubert-nemo-global-haha-01.txt, October 15, 2005.

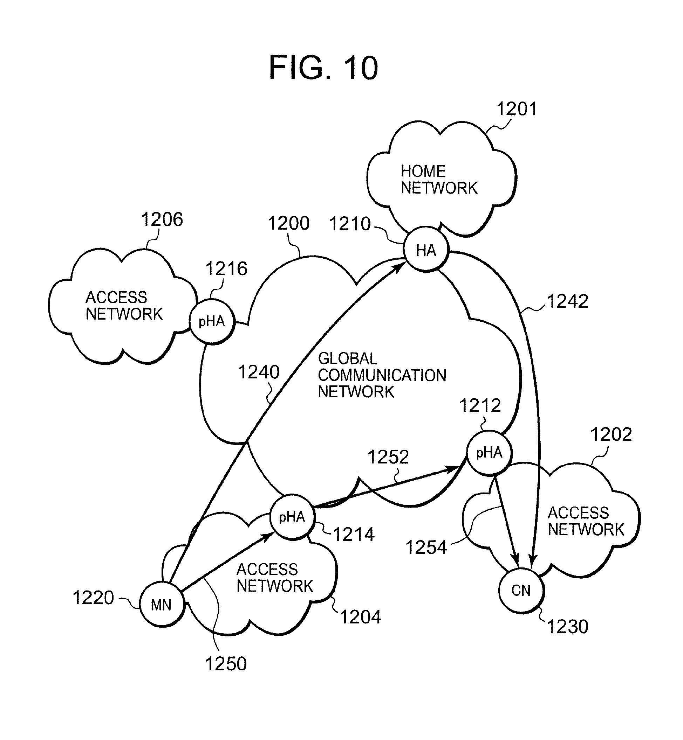

Meanwhile, Fig. 10 shows an example of arrangement where the shifting of HA functions is applied to a global home agent overlay network. In this example, an overlay network is disposed on a global communication network 1200. On this overlay network, one operator or one group including a plurality of operators working in cooperation with each other is disposed. In Fig. 10, a home agent HA 1210 is arranged at an end of a home network 1201, and a plurality of proxy home agents pHA 1212, pHA 1214 and 1216 are arranged on edges of the access networks 1202, 1204 and 1206 respectively. It should be noted here that a plurality of home agents can be disposed on the overlay network, and a home agent on a home network may serve as a proxy home agent of the other home network.

In order to facilitate the explanation, one home agent (HA 1210) and one home network 1210 are shown in Fig. 10.

In case an overlay network is in operation, whenever a mobile node (MN 1220) is connected to access networks 1202, 1204 and 1206 where each of pHA 1212, pHA 1214 and pHA 1216 are operating respectively, pHA 1212, pHA 1214 and pHA 1216 each serves as a home agent of MN 1220. For instance, as shown in Fig. 10, when MN 1220 is connected to the access network 1204, pHA 1214 is operated as a proxy home agent of MN 1220. This method is advantageous so that the overlay network can provide route optimization to the mobile node even when the mobile node has no specific function.

In Fig. 10, if there is no overlay network, and when MN 1220 performs communication with a correspondent node (CN) 1230, a packet transmitted by MN 1220 is tunnelized to HA 1210 and transferred to HA 1210 via a path 1240, and then, it must be transferred to CN 1230 via a path 1242. On the other hand, if there is an overlay network, pHA 1214 serves as a home agent of MN 1220. In this case, the packet transmitted by MN 1220 is intercepted by pHA 1214 via a path 1250. Then, pHA 1214 checks destination address (i.e. CN 1230) disposed on the access network 1202. Then, this packet is tunnelized to pHA 1212, which controls the access network 1202, and transfers it via a path 1252. Next, pHA 1212 decapsulates the tunnelized packet, and an inner packet is transferred to CN 1230 via a path 1254. The linking paths 1250, 1252 and 1254 when there is the overlay network are normally much shorter than the linking paths 1240 and 1242 when there is no overlay network, and route optimization can be accomplished.

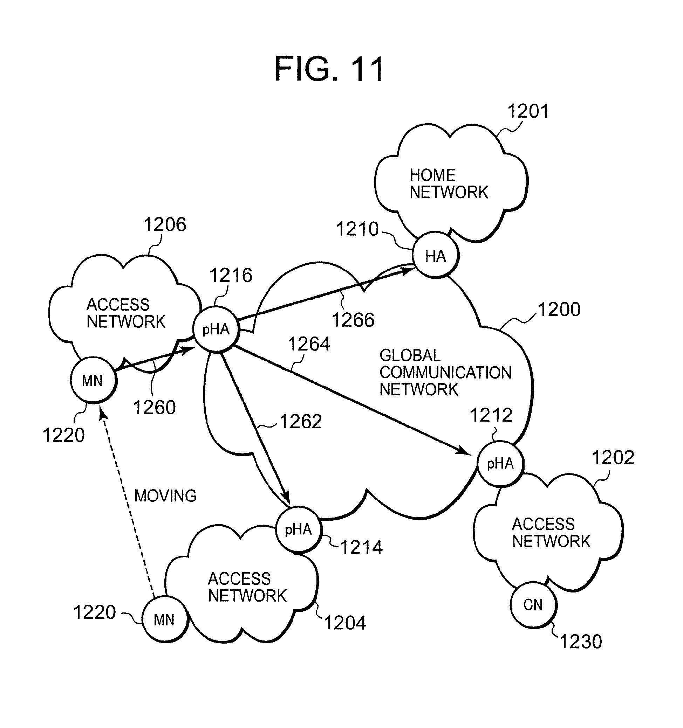

However, this overlay network is disadvantageous in that, whenever the mobile node changes the connection point, a large number of binding update messages are generated within the overlay network. This is shown in Fig. 11. Fig. 11 shows that MN 1220 moves from the access network 1204 to the access network 1206. After this moving, pHA 1216 in the access network 1206 of move destination intercepts a BU message 1260 transmitted from MN 1220, and this moving is detected. Because pHA 1216 does not have the know-how to recognize the connection point before MN 1220, the entire overlay network must be updated. In Fig. 11, this is shown by signaling messages 1262, 1264 and 1266. If there are a multiple number of mobile networks and the overlay networks are spread in gigantic spreading all over the entire global communication network 1200, the global communication network 1200 may become as large as Internet, and the amount of signalings will be extremely enormous.

In the prior art, there is almost no description on the judgment of adequate home agent as a target, to which functions are shifted in a network. Also, when a mechanism to select an adequate home agent is introduced in a system based on the existing prior art, a large number of signalings must be performed between all available home agents. Because of a large number of signalings, processing load of the home agent is increased, and the home agent may have difficulty to maintain the traffic to the mobile node.

### DISCLOSURE OF THE INVENTION

To overcome the above problems, it is an object of the present invention to provide a communication method, a communication system, a home agent, and a mobile node, by which it is possible to prevent the generations of a large number of binding update messages in the overlay network when the mobile node changes the connection point.

To attain the above object, the present invention provides a communication method in a communication system where a first home agent, being disposed in a home domain and holding a binding cache entry of a mobile node, and a plurality of second home agents, each capable to operate as a proxy of said first home agent, are overlaid on an existing network, wherein said method comprises:
a step of delegating a binding cache entry of said mobile node held by said first home agent to said second home agent where said mobile node is connected when said mobile node is connected to said second home agent; and
a step of re-delegating a binding cache entry of said mobile node delegated to said second home agent by said delegating step to a second home agent of move destination when said mobile node is re-connected to said second home agent of move destination different from said second home agent of move source.
By the method as described above, the mobile node delegates a binding cache entry of the mobile node to a second home agent where the mobile node is connected, and the second home agent serves as a proxy agent. As a result, when the mobile node changes connection point, it is possible to prevent the generation of a large number of binding update messages in the overlay network.

Also, the present invention provides the communication method as described above, wherein
when said mobile node is connected to said second home agent, said step of delegating comprises:
a step where said mobile node transmits a binding update message to said first home agent; and
a step where said first home agent checks said binding update message, decides a preferred proxy home agent from said plurality of second home agents, transmits said binding cache entry which is managed by said first home agent to the proxy home agent and transmits an acknowledgment message to said mobile node; and
when said mobile node is re-connected to a second home agent with move destination different from said proxy home agent, said re-delegating step comprises;
a step where said mobile node transmits a binding update message to said proxy home agent; and
a step where said proxy home agent checks said binding update message, decides said second home agent of move destination as a new proxy home agent, transmits said binding cache entry which is managed by said proxy home agent to a new proxy home agent, and transmits an acknowledgment message to said mobile node.
By the method as described above, the proxy home agent is changed non-transparently to the mobile node. This makes it possible to prevent the generation of a large number of binding update messages within the overlay network when the mobile node changes the connection point.

Further, the present invention provides the communication method as described above, wherein
when said mobile node is connected to said second home agent, said delegating step comprises:
a step where said mobile node transmits a binding update message to said first home agent;
a step where said first home agent checks said binding update message, decides a preferred proxy home agent from said plurality of second home agents, and transmits said binding cache entry which is managed by said first home agent to said proxy home agent; and
a step where said proxy home agent receives said binding cache entry and transmits an acknowledgement message to said mobile node; and
when said mobile node is re-connected to a second home agent of move destination different from that of said second home agent of move source, said re-delegating step comprises:
   a step where said mobile node transmits a binding update message to said first home agent;
   a step where said first home agent checks said binding update message, decides said second home agent of said move destination as a new proxy home agent, and transmits said binding cache entry which is managed by said first home agent to the new proxy home agent; and
   a step where said proxy home agent receives said binding cache entry and transmits an acknowledgement message to said mobile node.
   By the method as described above, the proxy home agent is changed in transparent mode to the mobile node. As a result, when the mobile node changes the connection point, it is possible to prevent the generation of a large number of binding update messages without giving change to the mobile node.

Also, the present invention provides the communication method as described above, wherein
any one or both of said delegating step and said re-delegating step comprise:
a step where said mobile node acquires access network information useful for determining a delegation target of home agent from an access network where said mobile node is connected;
a step where said mobile node transmits said access network information together with a binding update message to an arbitrary node belonging to an overlaid network;
a step where said arbitrary node belonging to said overlaid network checks said binding update message and said access network information, and decides a preferred proxy home agent from said plurality of second home agents as a delegation target; and
a step where a home agent currently managing the binding cache entry of said mobile node transmits said binding cache entry to said proxy home agent decided as said delegation target.
By the method as described above, when the proxy home agent is changed, due consideration is given on access network information useful for identification of the delegation target of the home agents connected by the mobile node. As a result, the proxy home agent can be changed as suitable for actual conditions of the mobile node and it is possible to prevent the generation of a large number of binding update messages without giving change to the mobile node.

Further, the present invention provides a communication system as described above, wherein: where a first home agent, being disposed in a home domain and holding a binding cache entry of a mobile node, and a plurality of second home agents, each capable to operate as a proxy of said first home agent, are overlaid on an existing network, wherein the communication system comprises;
means for delegating said binding cache entry of said mobile node being held by said first home agent to said second home agent where said mobile node is connected when said mobile node is connected to said second home agent; and
means for re-delegating a binding cache entry of said mobile node, delegated to said second home agent by said delegating means, to said second home agent of said move destination when said mobile node is re-connected to said second home agent of move destination different from said second home agent of move source.
By the arrangement as described above, a binding cache entry of the mobile node is delegated to a second home agent where the mobile node is connected, and the second home agent serves as a proxy home agent. As a result, it is possible to prevent the generation of a large number of binding update messages without giving change to the mobile node.

Also, the present invention provides the communication system as described above, wherein:
when said mobile node is connected to said second home agent, said delegating means comprises:
   means, by which said mobile node transmits a binding update message to said first home agent; and
   means, by which said first home agent checks said binding update message, decides a preferred proxy home agent from said plurality of second home agents, transmits said binding cache entry which is managed by said first home agent to said proxy home agent, and transmits an acknowledgment message to said mobile node; and
   when said mobile node is re-connected to a second home agent of move destination different from said proxy home agent, said re-delegating means comprises:
   means, by which said mobile node transmits a binding update message to said proxy home agent; and
   means, by which said proxy home agent checks said binding update message, decides said second home agent of said move destination as a new proxy home agent, transmits said binding cache entry which is managed by said proxy home agent to said new proxy home agent, and transmits an acknowledgement message to said mobile node.
   By the arrangement as described above, the proxy home agent is changed in non transparent mode to the mobile node. As a result, it is possible to prevent the generation of a large number of binding update messages without giving change to the mobile node.

Further, the present invention provides the communication system as described above, wherein:
when said mobile node is connected to said second home agent, said delegating means comprises:
   means, by which said mobile node transmits a binding update message to said first home agent;
   means, by which said first home agent checks said binding update message, decides a preferred proxy home agent from said plurality of second home agents, and transmits said binding cache entry which is managed by said first home agent; and
   means, by which said proxy home agent receives said binding cache entry and transmits an acknowledgment message to said mobile node; and
   when said mobile node is re-connected to a second home agent of move destination different from said second home agent of move source, said re-delegating means comprises:
   means, by which said mobile node transmits a binding update message to said first home agent,
   means, by which said first home agent checks said binding update message, decides said second home agent of move destination as a new proxy home agent, and transmits said binding cache entry which is managed by said first home agent to said new proxy home agent; and
   means, by which said proxy home agent receives said binding cache entry and transmits an acknowledgment message to said mobile node.
With the arrangement as described above, the proxy home agent can be changed in transparent mode to the mobile node. As a result, it is possible to prevent the generation of a large number of binding update messages within the overlay network when the mobile node changes the connection point without giving change to the mobile node.

Also, the present invention provides the communication system as described above, wherein:
any one or both of said delegating means and said re-delegating means comprise:
   means, by which said mobile node acquires access network information useful for detecting a delegation target of home agent from an access network where said mobile node is connected;
   means, by which said mobile node transmits said access network information together with a binding update message to an arbitrary node belonging to an overlaid network;
   means, by which said arbitrary node belonging to said overlaid network checks said binding update message and said access network information, and decides a preferred proxy home agent from said plurality of second home agents as said delegation target; and
   means, by which a home agent currently managing a binding cache entry of said mobile node transmits said binding cache entry to said proxy home agent decided as said delegation target.
   By the arrangement as described above, when the proxy home agent is changed, due consideration is given on access network information useful for identification of the delegation target of the home agents connected by the mobile node. As a result, the proxy home agent can be changed as suitable for actual conditions of the mobile node and it is possible to prevent the generation of a large number of binding update messages without giving change to the mobile node.

Further, the present invention provides a home agent in a communication system where a first home agent, being disposed in a home domain and holding a binding cache entry of a mobile node, and a plurality of second home agents, each capable to operate as a proxy of said first home agent, are overlaid on an existing network, said home agent being said first home agent, wherein:
when said mobile node transmits a binding update message in case said mobile node is connected to said second home agent, said first home agent comprises:
   means for receiving said binding update message;
   means for checking said received binding update message, for deciding a preferred proxy home agent from said plurality of second home agents, for transmitting said binding cache entry which is managed by said home agent itself to said proxy home agent, and for transmitting an acknowledgement message to said mobile node; and
   when said mobile node is re-connected to a second home agent of move destination different from said proxy home agent, said first home agent transmits a binding update message to said proxy home agent, said proxy home agent checks said binding update message, decides said second home agent of move destination as a new proxy home agent, transmits said binding cache entry which is managed by said proxy home agent to said new proxy home agent, and transmits an acknowledgment message to said mobile node.
   With the arrangement as described above, the proxy home agent can be changed in non-transparent mode to the mobile node. As a result, it is possible to prevent the generation of a large number of binding update messages within the overlay network when the mobile node changes the connection point without giving change to the mobile node.

Also, the present invention provides a home agent in a communication system where a first home agent, being disposed in a home domain and holding a binding cache entry of a mobile node, and a plurality of second home agents, each capable to operate as a proxy of said first home agent, are overlaid on an existing network, said home agent being said second home agent, wherein:
in case said mobile node is connected to said home agent, said home agent comprises means for transmitting a binding update message to said first home agent, for checking said binding update message, for deciding itself as a preferred proxy home agent from said plurality of second home agents, and for transmitting said binding cache entry which is managed by said first home agent, and in case an acknowledgment message is transmitted to said mobile node, said second home agent has means for receiving said binding cache entry and for serving as said proxy home agent; and
when said mobile node is re-connected to a second home agent with move destination different from said proxy home agent, said mobile node transmits a binding update message to said proxy home agent, said proxy home agent checks said binding update message, decides itself as said second home agent of move destination and as a new proxy home, transmits said binding cache entry which is managed by said proxy home agent, and an acknowledgment message is transmitted to said mobile node, said second home agent has means for receiving said binding cache entry and for serving as said new proxy home agent.
With the arrangement as described above, the proxy home agent can be changed in non-transparent mode to the mobile node. As a result, it is possible to prevent the generation of a large number of binding update messages within the overlay network when the mobile node changes the connection point without giving change to the mobile node.

Further, the present invention provides a mobile node in a communication system where a first home agent, being disposed in a home domain and holding a binding cache entry of a mobile node, and a plurality of second home agents, each capable to operate as a proxy of said first home agent, are overlaid on an existing network, wherein:
when said mobile node is connected to said second home agent, said mobile node has means for transmitting a binding update message to said first home agent;
when said first home agent checks said binding update message, decides a preferred proxy home agent from said plurality of second home agents, transmits said binding cache entry which is managed by itself to said proxy home agent, and transmits an acknowledgment message to said mobile node, said mobile node has means for receiving said acknowledgement message; and
means for transmitting a binding update message to said proxy home agent; and
when said mobile node is re-connected to a second home agent of move destination different from said proxy home agent, said mobile node has means for transmitting a binding update message to said proxy home agent; and
when said proxy home agent checks said binding update message, decides said second home agent of move destination as a new proxy home agent, transmits said binding cache entry under which is managed by said proxy home agent to said new proxy home agent, and transmits an acknowledgment message, said mobile node has means for receiving said acknowledgement message and for transmitting a binding update message to said new proxy home agent.
With the arrangement as described above, the proxy home agent can be changed in non-transparent mode to the mobile node. As a result, it is possible to prevent the generation of a large number of binding update messages within the overlay network when the mobile node changes the connection point without giving change to the mobile node.

Also, the present invention provides a home agent in a communication system where a first home agent, being disposed in a home domain and holding a binding cache entry of a mobile node, and a plurality of second home agents, each capable to operate as a proxy of said first home agent, are overlaid on an existing network, said home agent being said first home agent, wherein:
when a binding update message is transmitted in case said mobile node is connected to said second home agent, said mobile node has means for receiving said binding update message;
said first home agent has means for checking said received binding update message, for deciding preferred proxy home agent from said plurality of second home agents, and for transmitting said binding cache entry which is managed by itself to the proxy home agent so that said proxy home agent receives said binding cache entry and transmits an acknowledgment message to said mobile node;
when a binding update message is transmitted in case said mobile node is re-connected to a second home agent of move destination different from said proxy home agent, said first home agent has means for receiving said binding update message; and
said first home agent has means for checking said received binding update message, for deciding said second home agent of move destination as a new proxy home agent, and for transmitting said binding cache entry which is managed by itself to said new proxy home agent so that said proxy home agent receives said binding cache entry and transmits an acknowledgment message to said mobile node.
By the arrangement as described above, the proxy home agent is changed in transparent mode to the mobile node. As a result, it is possible to prevent the generation of a large number of binding update messages without giving change to the mobile node.

Further, the present invention provides a home agent in a communication system where a first home agent, being disposed in a home domain and holding a binding cache entry of a mobile node, and a plurality of second home agents, each capable to operate as a proxy of said first home agent, are overlaid on an existing network, said home agent being said second home agent, wherein:
in case said mobile node is connected to said second home agent and when a binding update message is transmitted to said first home agent, said first home agent checks said binding update message and decides itself as a preferred proxy home agent from said plurality of second home agents, and transmits said binding cache entry which is managed by said first home agent, said second home agent has means for receiving said binding cache entry and serving as a proxy home agent, and for transmitting an acknowledgment message to said mobile node; and
when said mobile node is re-connected to a second home agent of move destination different from said second home agent of move source, said mobile node transmits a binding update message to said first home agent, said first home agent checks said binding update message and decides itself as a new proxy home agent as said second home agent of move destination, and transmits said binding cache entry which is managed by said first home agent, and said second home agent has means for receiving said binding cache entry, for serving as said new proxy home agent, and for transmitting an acknowledgment message to said mobile node.
By the arrangement as described above, the proxy home agent is changed in transparent mode to the mobile node. As a result, it is possible to prevent the generation of a large number of binding update messages without giving change to the mobile node.

Also, the present invention provides a home agent in a communication system where a first home agent, being disposed in a home domain and holding a binding cache entry of a mobile node, and a plurality of second home agents, each capable to operate as a proxy of said first home agent, are overlaid on an existing network, said home agent being said first or second home agent, wherein said home agent has:
means for acquiring an access network information useful for determining a delegation target of home agent from an access network where said mobile node is connected, for receiving a binding update message transmitted when said mobile node is connected to said second home agent, and for receiving said access network information;
means for checking said binding update information and said access network information, and for deciding a preferred proxy home agent from said plurality of second home agents; and
means for controlling transmission of said binding cache entry from a home agent currently controlling a binding cache entry of said mobile node to said proxy home agent determined as said delegation target.
By the method as described above, when the proxy home agent is changed, due consideration is given on access network information useful for identification of the delegation target of the home agents connected by the mobile node. As a result, the proxy home agent can be changed as suitable for actual conditions of the mobile node and it is possible to prevent the generation of a large number of binding update messages without giving change to the mobile node.

Further, the present invention provides a mobile node in a communication system where a first home agent, being disposed in a home domain and holding a binding cache entry of a mobile node, and a plurality of second home agents, each capable to operate as a proxy of said first home agent, are overlaid on an existing network, wherein said mobile node has:
means for acquiring an access network information useful for determining a delegation target of home agent from an access network where said mobile node is connected; and
means for transmitting said access network information together with a binding update message to an arbitrary node belonging to an overlaid network.
By the method as described above, when the proxy home agent is changed, due consideration is given on access network information useful for identification of the delegation target of the home agents connected by the mobile node. As a result, the proxy home agent can be changed as suitable for actual conditions of the mobile node and it is possible to prevent the generation of a large number of binding update messages without giving change to the mobile node.

According to the present invention, it is possible to prevent the generation of a large number of binding update messages within the overlay network when the mobile node changes the connection points.

### BRIEF DESCRIPTION OF THE DRAWINGS

Fig. 1 is a schematical drawing to show a communication system according to a preferred first embodiment of the invention;
Fig. 2 is a drawing to explain a message sequence in the preferred first embodiment of the invention;
Fig. 3 is a drawing to explain a packet structure of a BCE delegation message in the preferred first embodiment of the invention;
Fig. 4 is a drawing to explain a packet structure of a BCE acknowledgement message;
Fig. 5 is a block diagram to show a basic arrangement of a proxy home agent, to which a binding cache entry is transferred in the preferred first embodiment of the invention;
Fig. 6 is a block diagram to show a basic arrangement of a mobile node in the preferred first embodiment of the invention;
Fig. 7 is a schematical drawing to show a communication system in a preferred second embodiment of the invention;
Fig. 8 is a drawing to show a message sequence in the preferred second embodiment of the invention;
Fig. 9 is a flowchart to show a processing algorithm of a proxy home agent of the invention;
Fig. 10 is a schematical drawing to show a system configuration and paths to explain the problems to be solved by the invention;
Fig. 11 is a schematical drawing to show signaling to explain the problems in Fig. 10;
Fig. 12 is a drawing to show a message sequence in a preferred third embodiment of the invention;
Fig. 13 is a schematical drawing to explain a packet structure of a BU message in the preferred third embodiment of the invention;
Fig. 14 is a block diagram to show a basic arrangement of a mobile node in the preferred third embodiment of the invention; and
Fig. 15 is a flowchart to show a processing algorithm in the preferred third embodiment of the invention.

### BEST MODE FOR CARRYING OUT THE INVENTION

Description will be given below on the embodiments of the present invention by referring to the attached drawings.

### <First embodiment>

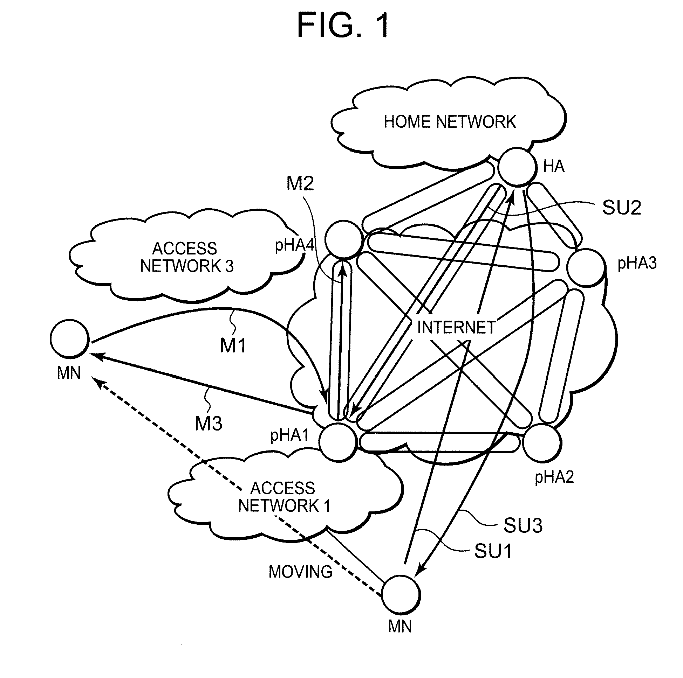

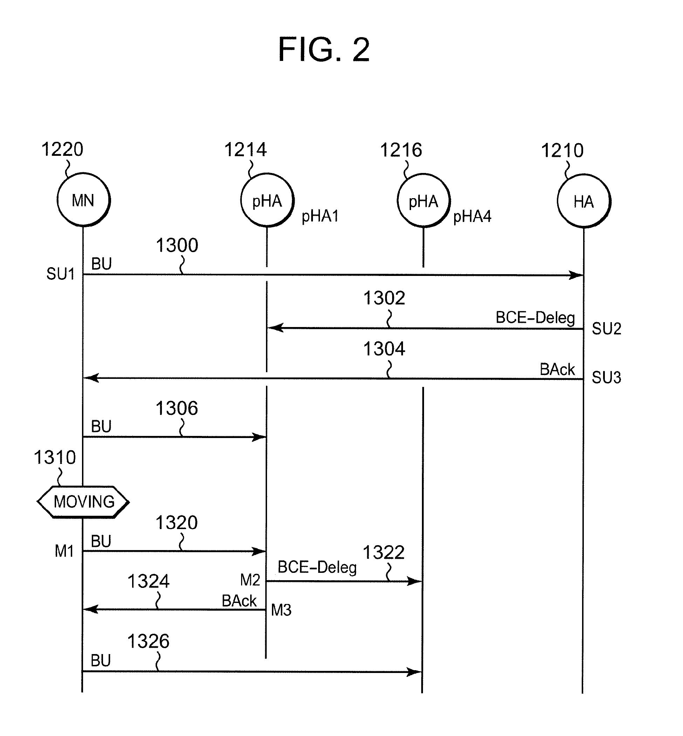

Fig. 1 shows a communication system according to a first embodiment of the invention, and Fig. 2 shows a communication sequence. The first embodiment is in non-transparent mode. Here, the non-transparent mode means a condition where a mobile node is notified of a change of its own home agent. In a global home agent overlay network as shown in examples of Fig. 1 and Fig. 2, no matter whenever a proxy home agent takes over functions of a home agent of MN 1220, this take-over is notified to MN 1220.
In this case, pHA 1, pHA 2, and pHA 4 correspond respectively to pHA 1214, pHA1212, and pHA 1216 as shown in Fig. 2, Fig. 10 and Fig. 11. Also, an access network 1 and an access network 3 shown in Fig. 1 correspond to access networks 1204 and 1206 in Fig. 10 and Fig. 11 respectively.

In Fig. 1 and Fig. 2, when MN 1220 first starts up in the access network 1240, a care-of address (CoA) is set up, and a BU message 1300 is transmitted to HA 1210, which is its home agent (SU1 in Fig. 1). HA 1210 checks this care-of address and decides that pHA 1214 (pHA 1 in Fig. 1) is the best proxy home agent to serve as a home agent of MN 1220 in the overlay network. Then, HA 1210 first delegates a binding cache entry (BCE) relating to MN 1220 to pHA 1214 by a BCE-Deleg message 1302. Next, HA 1210 transmits a binding acknowledgement (BAck) message 1304 to MN 1220 and notifies MN 1220 that the home agent is shifted to pHA 1214 (SU3 in Fig. 1). After this moment, MN 1220 transfers the next BU message (1306 in Fig. 2) to pHA 1214. As a result, a data packet is tunnelized between MN 1220 and pHA 1214 and is transferred.

It may be so designed that, in order that pHA 1214 can accept BCE delegation, HA 1210 transmits the binding acknowledgement (BAck) message 1304 after a reply message, which indicates that HA 1210 can serve as proxy to the BCE-Deleg message 1302, is received from pHA 1214.

Next, when MN 1220 moves out of the access network 1204 (Block 1310 in Fig. 2) and is connected again to the access network 1206, MN 1220 sets up a new care-of address and transmits a BU message 1320 to pHA 1214, which is a home agent currently assigned (M1 in Fig. 1). Upon receipt of the BU message 1320, pHA 1214 detects the change of the care-of address and decides that pHA 1216 (pHA 4) is the best proxy home agent to serve as the home agent of MN 1220. Then, pHA 1214 first delegates a binding cache entry relating to MN 1220 to pHA 1216 (M2 in Fig. 1) by a BCE-Deleg message 1322 and notifies MN 1220 that the home agent has shifted to pHA 1216 (M3 in Fig. 1). After this moment, MN 1220 transmits the next BU message (1326 in the figure) to pHA 1216. As a result, a data packet is transferred between MN 1220 and pHA 1216 by tunneling.

It may so designed that pHA 1214 transmits a binding acknowledgment (BAck) message 1324 after receiving a message to indicate that HA can serve as a proxy to the BCE-Deleg message 1322. Also, the BU message 1320 when MN 1220 is connected to a new network may be transferred to the initial HA 1210 of MN 1220 or may be transmitted to both of pHA 1214 and HA 1210 connected up to this moment. In case the BU message 1320 is transmitted only to the initial HA 1210 of MN 1320, a notification may be made that the BCE delegation has been terminated to pHA 1214, with which HA 1210 has been connected up to the moment.

From the description as given above, it is evident that the non-transparent mode according to the present invention can be applied to the global home agent overlay network. The advantage lies in that signaling caused by a large number of binding update messages does not occur within the overlay network even when the mobile node moves because the previous home agent carries out delegation and reassignment of the new home agent.

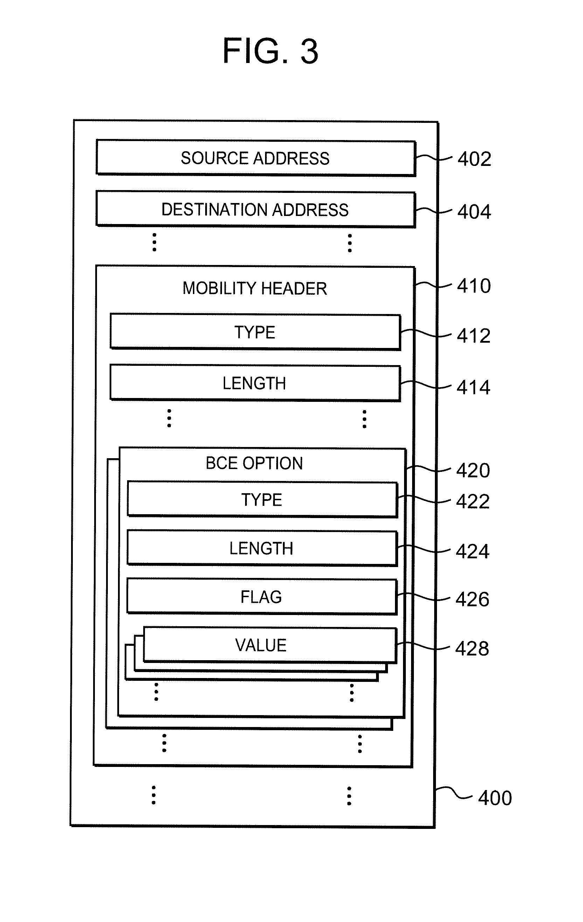

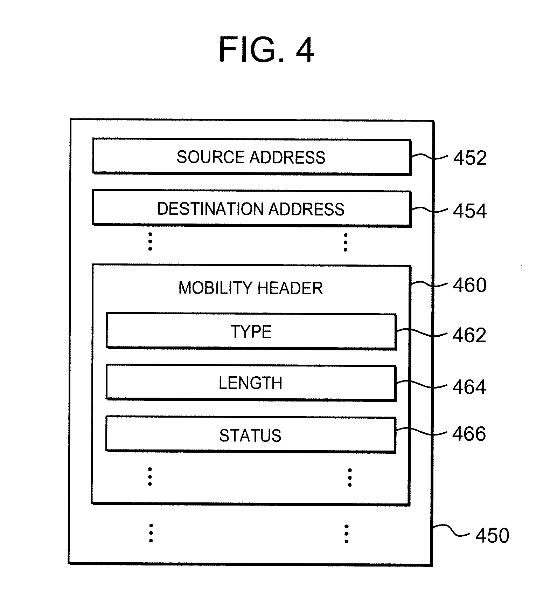

Description will be given below on a packet structure of the BCE-Deleg message and the BCE delegation acknowledgement (BCE-Ack) message. These messages are executed by using several new types of mobility headers. Fig. 3 and Fig. 4 represent a packet structure of the BCE-Deleg message 400 and a BCE-Ack message 450 respectively. The BCE-Deleg message 400 attains two principal purposes. A first purpose of the BCE-Deleg message 400 is to make it possible that the transmission side (HA 1210 and pHA 1214 in Fig. 2) requests the receiving side (pHA 1214 and pHA 1216 in Fig. 2) to carry out the functions as home agent. A second purpose is to make it possible that the transmission side notifies the receiving side about the current contents of the binding cache entry so that the receiving side can immediately serve as a home agent of the mobile node as notified. As to be described in detail below, the contents of each binding cache entry as transferred are included in a BCE option 420 within the BCE-Deleg message 400 as shown in Fig. 3.

As shown in Fig. 3, the BCE-Deleg message 400 has a standard IPv6 header, which contains a field 402 of source address and a field 404 of destination address. The BCE-Deleg message 400, which is a mobility protocol-related message, has a mobility header 410. Describing in detail on inside of the mobility header 410, a "type" field 412 indicates that this message is the BCE-Deleg message 400, and a "length" field 414 specifies a length of the mobility header message. Those skilled in the art would be able to understand that this message 400 may have a multiple of different options. For the purpose of the present invention, Fig. 3 shows a BCE option 420 only.

The BCE option 420 has a "type" field 422, which indicates that this option is a BCE option, and a "length" field 424, which indicates the size of the option. Also, a "flag" field 426 includes a plurality of flags, which indicate as to which kind of "value" is within the field 428 of one or more "values" of the BCE option 420. Each "value" field 428 can contain different parameters of the binding cache entry in response to the flag inside the "flag" field 426. This "value" includes a home address value and a care-of address of the binding cache entry, but it is not limited to these. Also, the mobile node can have a plurality of care-of addresses to be bound in one home address. Therefore, it may contain one or more alternate care-of addresses.
In case the binding cache entry contains binding information of a mobile router, the field 428 of one or more "values" may contain a mobile network prefix managed by the mobile router. Further, a security parameter necessary for the receiving side to establish security relating to the mobile node as indicated by the binding cache entry may be contained in one of the "value" fields 428.

The arrangement as described below may be adopted for the purpose of explaining how the "flag" field 426 and the "value" field 428 cooperate with each other to fulfill the functions. Specifically, a first bit of the "flag" field 426 indicates whether a field of home address value is present or not. A second bit indicates whether a field of primary care-of address value is present or not, and a third bit indicates whether a mobile network prefix is present or not. These "flag" fields 426 vary according to whether the content of the BCE option 420 is a mobile host, a mobile router, or a multi-mode terminal. Therefore, the content of data of the "flag" field 426 changes. By using the flag 426, various types of data are transferred. The flag 426 can make the range in use more efficient than the transmission of a standard size packet, which is defined as having NULL data in all possible fields. A receiver of this BCE option 420 can judge which parameter has been sent by the BCE-Deleg message 400 by merely seeing a value set in the flag field 426.

Those skilled in the art would be able to understand that Fig. 3 shows contents of a part of the BCE-Deleg message 400 and that other contents not shown may be included in the BCE-Deleg message 400. For instance, the BCE-Deleg message 400 may contain a sequence number for tracking each BCE-Deleg message 400 so that it would be possible to confirm which of BCE-Deleg messages 400 it is when a plurality of BCE-Deleg messages 400 are to be confirmed.

Fig. 4 shows a packet structure of the BCE-Ack message 450. The BCE-Ack message 450 is used to confirm (to respond to) the BCE-Deleg message 400 and has the standard IPv6 header, which has a source address field 452 and a destination address field 454. As the mobility protocol-related message, the BCE-Ack message 450 has a mobility header 460. The "type" field 462 specifies that this message is the BCE-Ack message, and the "length" field 464 shows the length of the mobility header 460.

This packet structure is a structure, which is simpler than that of the BCE-Deleg message 400. This is because, when the home agent accepts BCE transfer, the confirmation to indicate that the home agent has simply accepted BCE transfer can be accomplished by merely generating the confirmation in the "status" field 466 in the mobility header 460. In case the home agent detected an error in the packet structure of the BCE-Deleg message 400 and did not accept BCE delegation request, a notification as to which of the parameters has been transmitted by error may be given by arranging that the BCE-Ack message 450 contains one or more BCE options (not shown in Fig. 4). BCE option used in the BCE-Ack message 450 is similar to the BCE option 420 in the BCE delegation message 400. For instance, an error notification may be given to notify as to which parameter of the BCE option 420 in the BCE-Deleg message 400 is the error. The "flag" field 426 indicates whether the "value" field 428 is present or not.

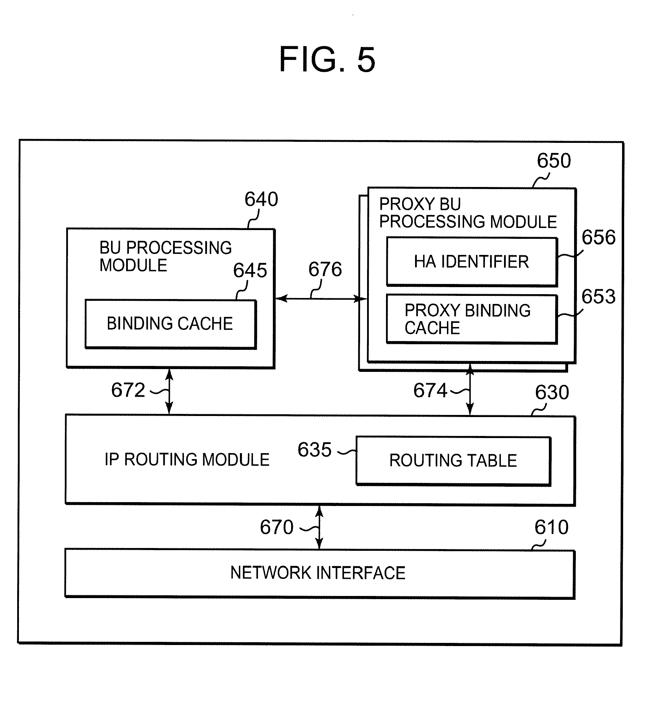

Fig. 5 shows a basic arrangement of pHA. The pHA has a normal BU processing module 640, a proxy BU processing module 650, an IP routing module 630, and one or more network interfaces 610. Signal paths 670, 672, 674, and 676 indicate paths of data and signaling between these modules 640, 650, 630 and 610 respectively. The network interfaces 610 have hardware, software and protocol necessary for attaining a physical layer and a data link layer. The IP routing module 630 preferably has a routing technique relating to all of the standard IPv6, MIPv6 and NEMO basic support and a mechanism specific to the protocol according to the present invention. For instance, when pHA receives various types of BCE-Deleg messages 400, it may be necessary to identify them, or it may be necessary to transmit a correct BCE-Ack message 450.

When a data packet is received at the network interface 610, this data packet is sent to the IP routing module 630 via the signal path 670. Then, this data packet is inspected by the IP routing module 630, and the next hop address is checked at a routing table 635. In case there is no destination address other than the address of a default router as the next hop address in the routing table 635, this data packet is checked at the BU processing module 640 and the proxy BU processing module 650.

When destination address of the data packet is present in the binding cache 645 of the BU processing module 640, this data packet is tunnelized to the care-of address as specified by the binding cache 645. In case it is identified that the destination address of this data packet is present in the proxy binding cache 653 of the proxy BU processing module 650, this data packet is sent to the care-of address specified by the proxy binding cache 653. No matter whichever of the binding cache 645 or the proxy binding cache 653 it may be, after the care-of address has been acquired, the tunnel packet is built up at the IP routing module 630. The parameters relating to the buildup of the tunnel packet are acquired via the signal paths 672 and 674.

Here, it is necessary to understand that pHA can provide proxy service to a plurality of mobile home agents. In this case, there may be a plurality of proxy binding caches 653. The proxy BU processing module 650 and the BU processing module 640 perform only the processing of the mobility-related message intercepted by pHA. Mutual operation between the proxy BU processing module 650 and the BU processing module 640 is carried out via the signal path 676. The signal path 676 is used to transfer the data packet, which cannot be discovered by specific binding caches 645 and 653.

Here, those skilled in the art would be able to understand that the functional arrangement as shown in Fig. 5 shows the minimum functional blocks to realize the proxy home agent of the present invention. In fact, several other functions are needed (e.g. functions such as accounting, authentication, access control, etc.).

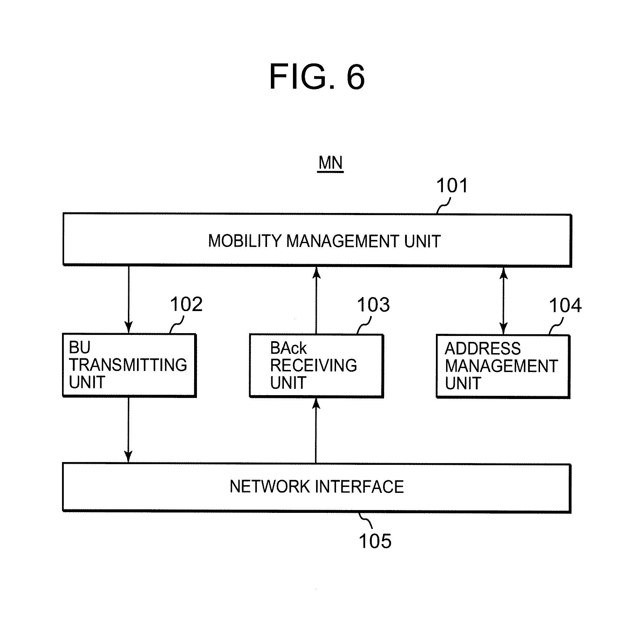

Fig. 6 shows a basic arrangement of MN 1220. MN 1220 comprises a mobility management unit 101, a BU transmitting unit 102, a BAck receiving unit 103, an address management unit 104, and a network interface 105. The mobility management unit 101 manages mobility of its own device. In particular, it transfers a BU message 1300 to HA 1210, a BU message 1306 to pHA 1214, and a BU message 1326 to pHA 1216 as shown in Fig. 2 via the BU transmitting unit 102 and the network interface 105. Also, the mobility management unit 101 receives a BAck message 1304 from HA 1210 and a BAck message 1324 from pHA 1214 via the network interface 105 and the BAck receiving unit 103 as shown in Fig. 2 and manages addresses of its own device or HA 1210, pHA 1214 and pHA 1216 at the address management unit 104.

### <Second embodiment>

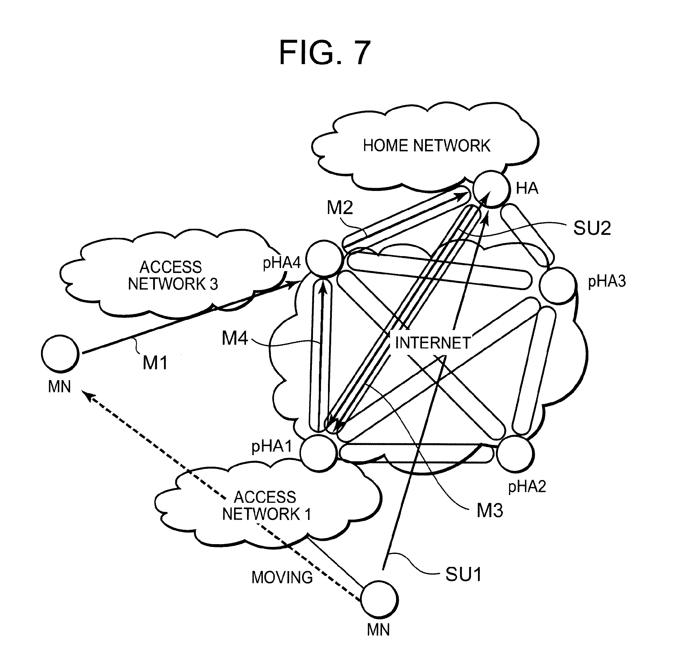

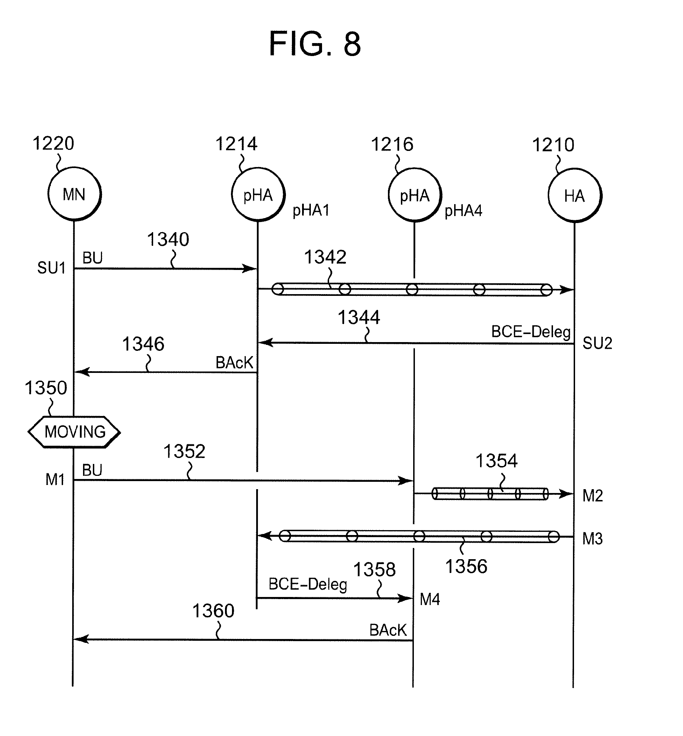

Fig. 7 shows a communication system of the second embodiment, and Fig. 8 shows its communication sequence. The second embodiment shows a transparent mode. Here, the transparent mode means that the mobile node is not notified of the change of its own home agent. In the examples of the global home agent overlay network as shown in Fig. 7 and Fig. 8, when the proxy home agent takes over the functions of the home agent of MN 1220, the take-over is not notified to MN 1220. Instead, when the proxy home agent serves as a home agent of MN 1220, it intercepts the packet addressed to HA 1210, which is an actual home agent, and processes the packet as if it is HA 1210.

In Fig. 7 and Fig. 8, MN 1220 first starts up at the access network 1204, and it sets up a care-of address (CoA) and transmits a BU message 1340 to HA 1210, which is its home agent (SU1 in Fig. 7). This BU message 1340 is intercepted by pHA 1214 and is tunnelized to HA 1210 and is transferred via the overlay network as a packet 1342. HA 1210 checks this care-of address and decides that pHA 1214 is the best proxy home agent to operate as the home agent of MN 1220 in the overlay network. Then, HA 1210 first delegates a binding cache entry relating to MN 1220 by a BCE-Deleg message 1344 to pHA 1214 (SU2 in Fig. 7). When pHA 1214 receives this delegation, it serves as a home agent of MN 1220 and transmits a BAck message 1346 to MN 1220. From this moment, the packet to be sent from MN 1220 to HA 1210 is intercepted by pHA 1214 and is processed. This processing includes the processing of the BU message and the processing of the encapsulated data packet. Then, pHA 1214 processes the BU message and transfers the data packet in the overlay network.

Here, description has been given under the assumption that the packet transmitted by MN 1220 can be intercepted by pHA 1214. In case this assumption cannot be realized, it should be turned back to a normal arrangement (e.g. HA 1210 receives the BU message and does not delegate the binding cache entry to pHA 1214), or it may be so arranged that it serves under the condition where the present invention and normal arrangement are simultaneously used (e.g. HA 1210 receives the BU message, and the binding cache entry is delegated in parallel to cope with the case where the packet reaches pHA 1214). Also, when pHA 1214 is under such condition that the delegation cannot be accepted (e.g. it has already accepted the delegation and cannot increase the processing load or the like), pHA may send a message to notify this condition to MN 1220 or HA 1210 or to both.

Next, when MN 1220 moves out from the access network 1204 (Block 1350 in Fig. 8) and is connected again to the access network 1206, MN 1220 sets up a new care-of address and transmits a BU message 1352 to HA 1210, which is its home agent (M1 in Fig. 7). In the transparent mode, MN 1220 does not know the change of the home agent. The BU message 1352 is intercepted by pHA 1216. Then, it is tunnelized as a packet 1354 and is transferred to HA 1210 via the overlay network (M2 in Fig. 7). When HA 1210 detects that the home agent function for MN 1220 is already delegated to pHA 1214, this BU message 1352 is transferred to pHA 1214 as shown by a packet 1356 (M3 in Fig. 7).

When the BU message 1352 is received, pHA 1214 detects the change of the care-of address and decides that pHA 1216 is the best proxy home agent to serve as the home agent of MN 1220 in the overlay network. Then, pHA 1214 first delegates a binding cache entry relating to MN 1220 to pHA 1216 in a BCE-Deleg message 1358 (M4 in Fig. 7). When this delegation is accepted, pHA 1216 serves as the home agent of MN 1220 and transmits a BAck message 1360 to MN 1220. After this moment, the packet sent from MN 1220 to HA 1210 is intercepted by pHA 1216 and is processed. Specifically, pHA 1216 encapsulates the BU message and the data packet and transfers them in the overlay network.

Here, description has been given under the assumption that pHA 1216 can intercept the packet transmitted by MN 1220 in the network. If this assumption cannot be realized, it would also be possible to fall back to the normal arrangement (e.g. HA 1210 or pHA 1214 continuously serves as the home agent of MN 1220) or to serve under the condition where the present invention and the normal arrangement are both used (e.g. HA 1210 or pHA 1214 receives the BU message and the binding cache entry is delegated to pHA 1216 in parallel to cope with the situation when the packet could reach). When it is under the condition that the delegation cannot be accepted, pHA 1216 may send back a message to convey this fact to MN 1220 or HA 1210.

From the description as given above, it is evident that the transparent mode according to the present invention can be applied to the global home agent overlay network. This is advantageous in that the mobile node has no need to have new functions because the functions of home agent are shifted without notifying to the mobile node. Further, the home agent functions are shifted between the previous home agent and the new home agent, and even when the mobile node moves, no signaling caused by a large number of binding update message occurs in the overlay network.

In the descriptions on the non-transparent mode and the transparent mode as given above, it is explained that the shifting of the home agent functions is started by the previous home agent (pHA 1214) and the functions are delegated to a new home agent (pHA 1216), while it would be apparent to those skilled in the art that there may be other cases. For instance, the previous home agent (pHA 1214) may send back the delegation to the initial home agent (HA 1210) and the initial home agent may re-delegate to a new proxy home agent (pHA 1216). This is advantageous in that the initial home agent can recognize as to which proxy home agent is currently serving as the home agent of the mobile node.

Also, as another example, the delegation may be given by the actual home agent directly - but in cooperation with other home agent. That is, the previous home agent pHA 1214 may notify the change of care-of address to HA 1210, which is the initial home agent, and entrusts the initial home agent HA 1210 to select a new proxy home agent. Then, the previous home agent pHA 1214 delegates the home agent functions to the selected proxy home agent. This is advantageous in that there is no need to uselessly send back the delegation to the initial home agent and the initial home agent can recognize as to which proxy home agent is currently serving as the home agent of the mobile node.

Further, HA 1210 may detect the moving of MN 1220 by directly receiving the BU messages 1340 and 1352 from MN 1220 and HA 1210 may notify both of pHA 1214 and pHA 1216 so that the delegation to pHA 1214, to which MN 1220 has been connected, is terminated, and the delegation to the newly connected pHA 1216 may be started.

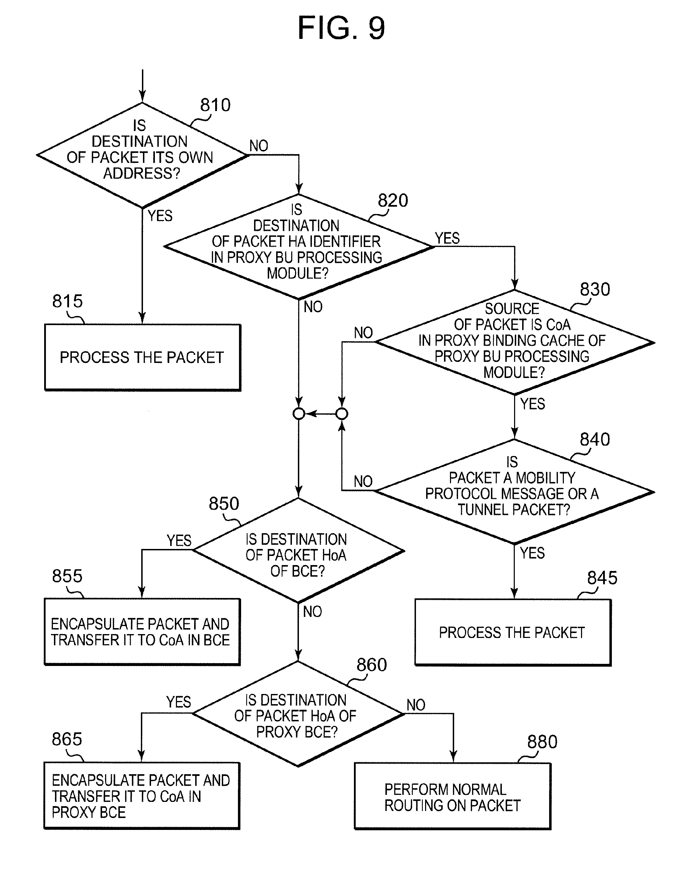

Fig. 9 shows the steps of processing when pHA receives the packet. First, in Step 810, it is checked whether the received packet is destined to pHA itself or not.
If it is addressed to itself, the packet is normally processed in Step 815. On the other hand, if it is not destined to itself, it is advanced to the identifying step 821, and it is checked whether the destination of the received packet is an HA identifier 656 (Fig. 5) in one of the proxy BU processing modules 650 or not. If it is so, it is checked further, as shown in Step 830, whether or not the source address of the received packet is the same as the care-of address (CoA) of the entry in a proxy binding cache 653 in a proxy BU processing module 650 or not. If it is so, it is further checked, as shown in Step 840, whether the received packet is a mobility protocol message or a tunnel packet. If the received packet is the mobility protocol message or the tunnel packet, the received packet is processed for the home agent as specified by the HA identifier 656 in the proxy BU processing module 650 (instead of this home agent) as shown in Step 845.

This implicitly suggests that the proxy BCE table should be updated and the binding acknowledgement (BAck) message should be transmitted if the received packet is a mobility-related message sent to itself from the mobile node, which serves as a proxy home agent. Those skilled in the art would be able to understand that this binding acknowledgement message has the same source address as that of the HA identifier 656. If the received packet is a tunnel packet, the received packet is decapsulated, and the packet inside is transferred to its destination.

On the other hand, if the answer is "No" in the identifying steps 820, 830 or 840, it is shifted to Step 850. In Step 850, it is checked whether the destination of the received packet is the home address (HoA) in the binding cache 645 or not. If it is so, the procedure of Step 855 is carried out, and the received packet is encapsulated so that the destination is set to the care-of address (CoA) and the source address of tunnel is set to the address of its own. If it is not so, it is checked in Step 860 whether the destination address of the received packet is the home address (HoA) in the proxy binding cache 653 or not. If it is so, as shown in Step 865, the received packet is encapsulated to the care-of address (CoA) as given in the proxy binding cache 653. If it is not so, the received packet is processed by normal routing in Step 880.

### <Third embodiment>

In the embodiment as given above, description is given on a case where the home agent in the overlay network identifies as to which node is the optimal proxy home agent for the purpose of delegating the functions of home agent to the mobile node. In this case, however, need may arise, for instance, to positively search a candidate of the home agent in the overlay network. As a result, processing load of the home agent is increased, and in case it is necessary for the home agent to perform probe transmission to the other home agent in the overlay network, the load in the network may increase further due to useless signaling message.

As the case where an extra signal message is needed, there is a case where the home agent cannot identify as to which node in the overlay network is the best candidate as the destination of the transfer of home agent functions of the mobile node. For instance, this is the case where there are a plurality of candidates near the present position of the mobile node. Depending on the current processing load of the proxy home agent, which is at the position closest to the mobile node, it is possible that the proxy home agent at the closest position may not be the best selection. Further, if the current moving situation of the mobile node is taken into account, the proxy home agent at the closest position may not be the best selection. For instance, it is the case where the mobile node moves beyond the range managed by the proxy home agent within short time and it is necessary to shift the home agent functions again.

In this respect, in the third embodiment of the invention, description will be given on a case where the mobile node collects information relating to the access network after a handover and delivers the information to the home agent. It is desirable that the proxy home agent in the overlay network, to which home agent functions can be delegated, can be easily identified from this information.

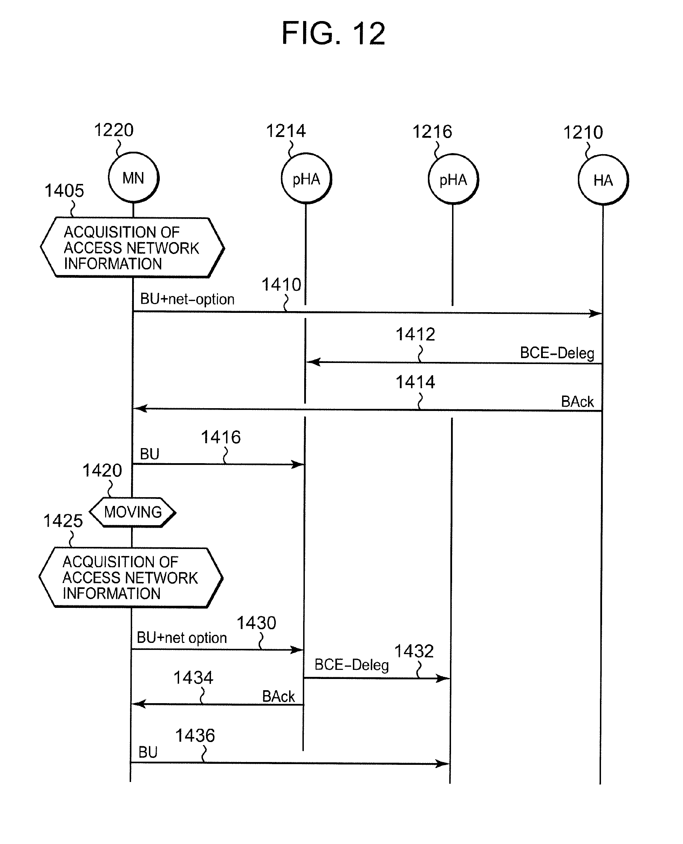

Description will be given below on the third embodiment of the invention based on a system configuration as shown in Fig. 10. Fig. 12 shows a communication sequence in the third embodiment of the invention.

In Fig. 12, MN 1220 first starts up in an access network 1204 and acquires information (access network information) from the access network, to which it is currently connected, as shown in Block 1405. It is desirable that an identifier of the proxy home agent, which can accept the role of the home agent of MN 1220, is contained in this information. Also, this information may contain an information, according to which any arbitrary home agent in the overlay network can easily find a proxy home agent, which can take over the role of the home agent of MN 1220. As this identifier, it is desirable to have a network identifier of the access network or an address of the proxy home agent, which is present in the access network, while it is not limited to these.

In the present specification, the term "access network information" is used for representing the information as described above (e.g. information containing an identifier of a proxy home agent, which can take over the role of the home agent of MN 1220). The access network information can be acquired by MN 1220, and there are various types of arbitrary methods to acquire this information.

For instance, in a case where access is allowed after the mobile node has exchanged certification information with the access network (e.g. cellular network such as 3GPP network), the access network information is given to MN 1220 in the stage where the certification information is exchanged. Also, the access network may provide a local information server as defined in MIH-IS (Media Independent Handover Information Service) of IEEE 802.21, for instance, and MN 1220 acquires the access network information from the local information server. Further, it may be so designed that the access router provides such information by a router advertisement message transmitted to the mobile node from the access router.

When the mobile node acquires IP address by using DHCP (Dynamic Host Configuration Protocol), the access network information may be delivered to the mobile node from a DHCP server at the same time as the delivery of IP address to the mobile node.

As shown by Block 1405 in Fig. 12, after MN 1220 acquires the access network information, MN 1220 sets up a care-of address and transmits a BU message to its home agent HA 1210 in Step 1410.

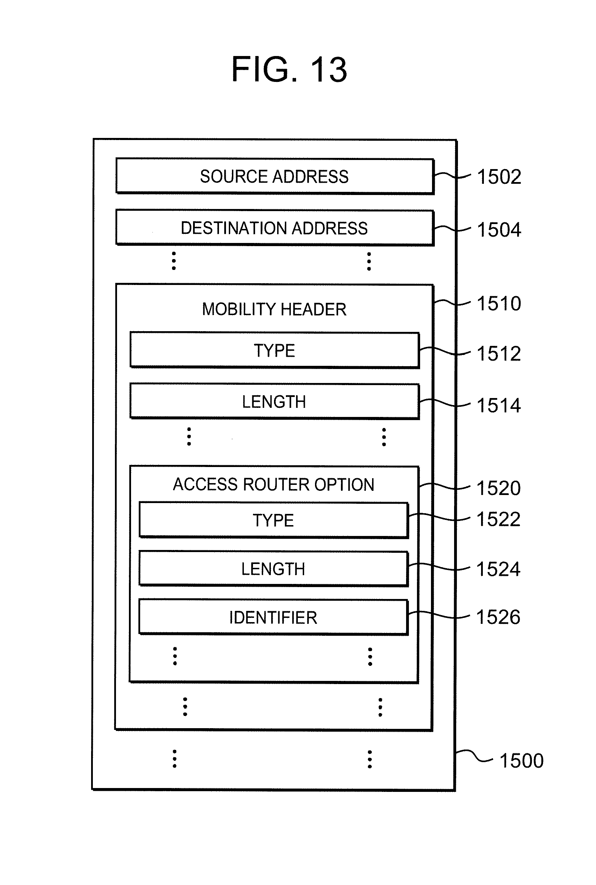

This BU message contains a specific option (net-option) to carry the access network information. Fig. 13 shows a packet structure of this BU message (to be described later). After confirming the access network information, HA 1210 decides the best proxy home agent in the overlay network to fulfill the functions as the home agent of MN 1220. Then, in Step 1412, HA 1210 delegates a binding cache entry relating to MN 1220 to pHA 1214 by using a BCE-Deleg message. Next, in Step 1414, HA 1210 transmits a binding acknowledgment message 1414 to notify MN 1220 that the home agent is changed to pHA 1214. Thereafter, MN 1220 transmits the subsequent BU message (e.g. a BU message to be transmitted in Step 1416) to pHA 1214. Also, the data packet is transferred in similar manner via the tunnel between MN 1220 and pHA 1214.

When MN 1220 moves from the access network 1204 and is connected again to the access network 1206 as shown by Block 1420 in Fig. 12, the access network information is acquired as shown in Step 1425, and a new care-of address is set up again. Then, MN 1220 transmits a BU message added with a specific option (net-option) carrying a new access network information to a currently assigned home agent (pHA 1214) in Step 1430. When the BU message is received in Step 1430, pHA 1214 becomes aware of the presence of the new access network information, and it judges that pHA 1216 is the best proxy home agent in the overlay network to fulfill the functions as the home agent of MN 1220 according to the new access network information. As a result, pHA 1214 delegates a binding cache entry relating to MN 1220 to pHA 1216 by using the BCE-Deleg message in Step 1432. Next, in Step 1434, HA 1210 transmits a binding acknowledgement message to notify MN 1220 that the home agent is changed to pH 1216. Thereafter, MN 1220 transmits the subsequent BU messages (e.g. a BU message to be transmitted in Step 1436 or the like) to pHA 1216. Also, the data packet is transferred via the tunnel between MN 1220 and pHA 1216 in similar manner.

Fig. 12 shows a case where the delegation of the home agent functions is notified to the mobile node (the case of the non-transparent mode), while this can also be applied to the operation relating to the transparent mode. In this case, also, the mobile node transmits the access network information by a binding update message transmitted to its own home agent. The node in the overlay network intercepts the binding update message and performs processing of the access network information. The node judges that the delegation of home agent should be carried out according to the access network information, and the processing to shift (change) the home agent functions from the home agent of move source to a new proxy home agent in the overlay network is started. The node intercepting this binding update message may have the home agent functions, and the node itself may be the proxy home agent, to which the home agent functions are delegated.

Fig. 13 shows an example of a format, by which the BU message carries the access network information. A BU message 1500 has a standard IPv6 header provided with a field 1502 of source address and a field 1504 of destination address. The BU message 1500 is a message relating to the mobility protocol and contains a mobility header 1510. The "type" field 1512 indicates that this message is the BU message 1500, and the "length" field 1514 indicates a length of the mobility header message. Although it would be obvious to those skilled in the art that a multiple of various options may be present for this message, only an access network option 1520 necessary for realizing the present invention is shown in Fig. 13.

In the access network option 1520, there are a "type" field 1522 to indicate that this option is an access network information option and a "length" field 1524 to indicate the size of this option. An "identifier" field 1526 contains access network information to be used for identifying the proxy home agent, which can be used in the access network where the transmitter is currently connected.

Fig. 13 shows only a part of the contents of the BU message 1500, and those skilled in the art would understand that other contents (not shown) may be contained in the BU message 1500. For instance, in case the transmitter is in multi-home state and is connected to a plurality of different access networks, a plurality of access network options may be present in the BU message 1500. In this case, the access network option 1520 must have an additional field to indicate as to which interface this access network information is applied. There is a case where one or more usable and adequate proxy home agents may be present within the access network. In such case, it is desirable that one or more "identifier" field 1526 for identifying these proxy home agents are contained in the access network option 1520.

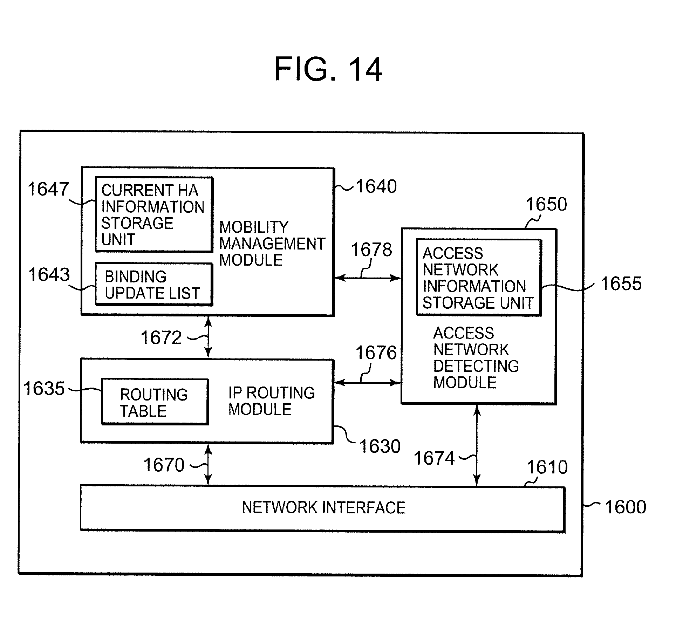

Fig. 14 shows a basic arrangement of MN 1220 in the third embodiment of the present invention. MN 1220 as shown in Fig. 14 comprises one or more network interfaces 1610, an IP routing module 1630, a mobility management module 1640, and an access network detecting module 1650. Signal paths 1670, 1672, 1674, 1676, and 1678 represent data and signaling among these modules 1610, 1630, 1640, and 1650 respectively. The network interfaces 1610 have all of hardware, software and protocols indispensable for realizing physical layer and data link layer. Also, the IP routing module 1630 has a mechanism specific to overall routing technique relating to the standard IPv6 and to the protocol relating to the present invention.

When the data packet is received at the network interface 1610, the data packet is sent to an IP routing module 1630 via the signal path 1670. Then, the validity of this packet is checked at the IP routing module 1630, and the packet is delivered to the related module and further processing is performed. For instance, in case the received packet contains a message relating to mobility, the packet is delivered to a mobility management module 1640 via the signal path 1672 and is processed. Also, in case the received packet contains a message relating to the detection of access network or to the access network information, the packet is delivered to an access network detecting module 1650 via the signal path 1676 and is processed. The routing table 1635 contains such types of information as to be referred when the IP routing module 1630 determines the routing. For instance, a typical routing table 1635 contains a plurality of entries, and each of the entries contains such types of information as the next hop address or network interfaces for the transfer of the packet in relation to the destination address represented in a specific range.

The mobility management module 1640 carries out the management of mobility in a layer 3 of the mobile node. The mobility management module 1640 has the function to transmit a binding update message to notify the binding of one or more care-of addresses and home addresses of the mobile node to the other node. Also, the binding update list 1643 contains a list of entries (transmission destination of the binding update message), to which the binding update message should be sent. To transmit the binding update message, the mobility management module 1640 prepares a BU message and delivers the BU message to the IP routing module 1630 to transmit this BU message. Information of the home agent, to which the mobile node is currently connected (e.g. IP address, security association parameter, etc.) are contained in an HA information storage unit 1647.

The access network detecting module 1650 has hardware or software necessary for collecting the types of information for detecting a network handover and relating to a new access network at the detection of a handover. As described above, there are various methods to acquire the access network information (e.g. to acquire by an option in the route advertisement message received, or an option in the DHCP response message received), and the access network detecting module 1650 can use any method as desired.

In the access network information storage unit 1655, current types of access network information are included. When the access network information is changed, the access network detecting module 1650 operates the mobility management module 1640 via the signal path 1678. It is desirable that the mobility management module 1640 transmits a new BU message containing access network option by this trigger. Also, there is a case where the access network information is embedded in a layer 2 frame. In this case, the packet is directly delivered to the access network detecting module 1650 from the network interface 1610 via the signal path 1674.
The functional architecture as shown in Fig. 14 has only the minimal functional blocks to realize the mobile node as defined in the present invention. Actually, however, there are the cases where several other functions are needed (e.g. a transport protocol or a session protocol provided according to the requirements of user application).

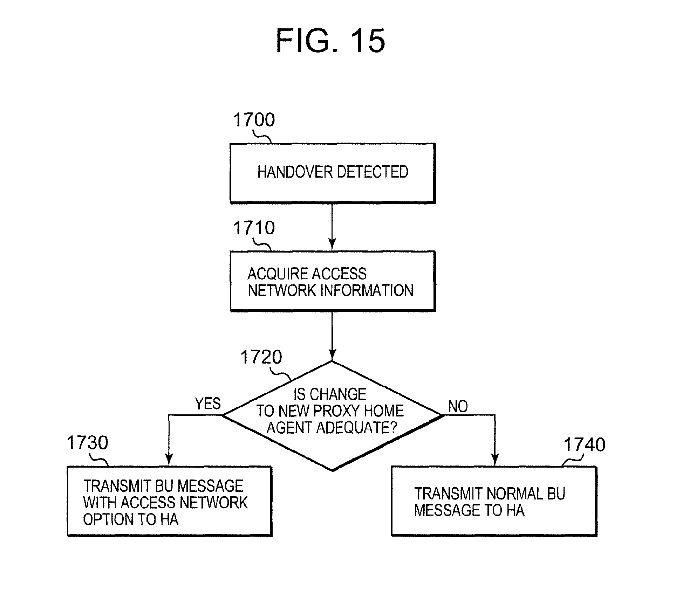

Fig. 15 shows a flowchart of an example of operation of the mobile node relating to a handover. When a handover is detected in Step 1700, the mobile node first acquires access network information of a new access network as shown in Step 1710. Then, in Step 1720, the mobile node checks the acquired new access network information and judges whether the new proxy home agent is adequate or not as the home agent of the mobile node. This judgment may be made according to a distance from the current connection point of the mobile node to the current home agent assigned to the mobile node, and further, according to the current moving direction of the mobile node.

In case it is judged that the new proxy home agent is more adequate and usable, the mobile node transmits a new BU message to the current home agent as shown in Step 1730. This new BU message contains one or more access network options. By using these options, it is requested to the current home agent of the mobile node to delegate a BCE entry to the designated proxy home agent. On the other hand, in case it is judged that there is no need to change the proxy home agent, it is advanced to Step 1740, and a normal BU message is sent to the current home agent of the mobile node.

In the above, description has been given on the most practical and the most preferred embodiments of the present invention. Those skilled in the art would naturally understand that various changes and modifications can be made on the arrangements and the parameters without departing from the spirit and the scope of the present invention.
For instance, the binding update message to be used in the overlay network as described in the embodiments of the present invention as described above may be the same message as the binding update message transmitted by the mobile node, and the method of notifying or the structure of the message may be different. It would be possible to transmit or receive the binding update message suitable for the arrangement of the overlay network adopted.

Each functional block used in the description of the embodiments of the present invention as given above can be realized as LSI (Large Scale Integration), typically represented by the integrated circuit. These may be produced as one chip individually or may be designed as one chip to include a part or all. Here, it is referred as LSI, while it may be called IC, system LSI, super LSI, or ultra LSI, depending on the degree of integration. Also, the technique of integrated circuit is not limited only to LSI and it may be realized as a dedicated circuit or a general-purpose processor. FPGA (Field Programmable Gate Array), which can be programmed after the manufacture of LSI, or a reconfigurable processor, in which connection or setting of circuit cell inside LSI can be reconfigured, may be used. Further, with the progress of semiconductor technique or other techniques derived from it, when the technique of circuit integration to replace LSI may emerge, the functional blocks may be integrated by using such technique. For example, the adaptation of biotechnology is one of such possibilities.

### INDUSTRIAL APPLICABILITY

The present invention provides such effects that the generation of a large number of binding update messages in the overlay network can be prevented when a mobile node changes the connection point, and the invention can be applied in a system, which is overlaid on a global communication network such as Internet.

## Claims

1. A communication method in a communication system where a first home agent, being disposed in a home domain and holding a binding cache entry of a mobile node, and a plurality of second home agents, each capable to operate as a proxy of said first home agent, are overlaid on an existing network, wherein said method comprises:
a step of delegating a binding cache entry of said mobile node held by said first home agent to said second home agent where said mobile node is connected when said mobile node is connected to said second home agent; and
a step of re-delegating a binding cache entry of said mobile node delegated to said second home agent by said delegating step to a second home agent of move destination when said mobile node is re-connected to said second home agent of move destination different from said second home agent of move source.

2. The communication method according to claim 1, wherein:
when said mobile node is connected to said second home agent, said step of delegating comprises:
a step where said mobile node transmits a binding update message to said first home agent; and
a step where said first home agent checks said binding update message, decides a preferred proxy home agent from said plurality of second home agents, transmits said binding cache entry which is managed by said first home agent to the proxy home agent and transmits an acknowledgment message to said mobile node; and
when said mobile node is re-connected to a second home agent with move destination different from said proxy home agent, said re-delegating step comprises;
a step where said mobile node transmits a binding update message to said proxy home agent; and
a step where said proxy home agent checks said binding update message, decides said second home agent of move destination as a new proxy home agent, transmits said binding cache entry which is managed by said proxy home agent to a new proxy home agent, and transmits an acknowledgment message to said mobile node.

3. The communication method according to claim 1, wherein:
when said mobile node is connected to said second home agent, said delegating step comprises:
a step where said mobile node transmits a binding update message to said first home agent;
a step where said first home agent checks said binding update message, decides a preferred proxy home agent from said plurality of second home agents, and transmits said binding cache entry which is managed by said first home agent to said proxy home agent; and
a step where said proxy home agent receives said binding cache entry and transmits an acknowledgement message to said mobile node; and
when said mobile node is re-connected to a second home agent of move destination different from said second home agent of move source, said re-delegating step comprises:
a step where said mobile node transmits a binding update message to said first home agent;
a step where said first home agent checks said binding update message, decides said second home agent of said move destination as a new proxy home agent, and transmits said binding cache entry which is managed by said first home agent to the new proxy home agent; and
a step where said proxy home agent receives said binding cache entry and transmits an acknowledgement message to said mobile node.

4. The communication method according to claim 1, wherein:
any one or both of said delegating step and said re-delegating step comprise:
a step where said mobile node acquires an access network information useful for determining a delegation target of home agent from an access network where said mobile node is connected;
a step where said mobile node transmits said access network information together with a binding update message to an arbitrary node belonging to an overlaid network;
a step where said arbitrary node belonging to said overlaid network checks said binding update message and said access network information, and decides a preferred proxy home agent from said plurality of second home agents as a delegation target; and
a step where a home agent currently managing the binding cache entry of said mobile node transmits said binding cache entry to said proxy home agent decided as said delegation target.

5. A communication system where a first home agent, being disposed in a home domain and holding a binding cache entry of a mobile node, and a plurality of second home agents, each capable to operate as a proxy of said first home agent, are overlaid on an existing network, wherein the communication system comprises;
means for delegating said binding cache entry of said mobile node being held by said first home agent to said second home agent where said mobile node is connected when said mobile node is connected to said second home agent; and
means for re-delegating a binding cache entry of said mobile node, delegated to said second home agent by said delegating means, to said second home agent of said move destination when said mobile node is re-connected to said second home agent of move destination different from said second home agent of move source.

6. The communication system according to claim 5, wherein:
when said mobile node is connected to said second home agent, said delegating means comprises:
means, by which said mobile node transmits a binding update message to said first home agent; and
means, by which said first home agent checks said binding update message, decides a preferred proxy home agent from said plurality of second home agents, transmits said binding cache entry which is managed by said first home agent to said proxy home agent, and transmits an acknowledgment message to said mobile node; and
when said mobile node is re-connected to a second home agent of move destination different from said proxy home agent, said re-delegating means comprises:
means, by which said mobile node transmits a binding update message to said proxy home agent; and
means, by which said proxy home agent checks said binding update message, decides said second home agent of said move destination as a new proxy home agent, transmits said binding cache entry which is managed by said proxy home agent to said new proxy home agent, and transmits an acknowledgement message to said mobile node.

7. The communication system according to claim 5, wherein:
when said mobile node is connected to said second home agent, said delegating means comprises:
means, by which said mobile node transmits a binding update message to said first home agent;
means, by which said first home agent checks said binding update message, decides a preferred proxy home agent from said plurality of second home agents, and transmits said binding cache entry which is managed by said first home agent; and
means, by which said proxy home agent receives said binding cache entry and transmits an acknowledgment message to said mobile node; and
when said mobile node is re-connected to a second home agent of move destination different from said second home agent of move source, said re-delegating means comprises:
means, by which said mobile node transmits a binding update message to said first home agent,
means, by which said first home agent checks said binding update message, decides said second home agent of move destination as a new proxy home agent, and transmits said binding cache entry which is managed by said first home agent to said new proxy home agent; and
means, by which said proxy home agent receives said binding cache entry and transmits an acknowledgment message to said mobile node.

8. The communication system according to claim 5, wherein:
any one or both of said delegating means and said re-delegating means comprise:
means, by which said mobile node acquires access network information useful for detecting a delegation target of home agent from an access network where said mobile node is connected;
means, by which said mobile node transmits said access network information together with a binding update message to an arbitrary node belonging to an overlaid network;
means, by which said arbitrary node belonging to said overlaid network checks said binding update message and said access network information, and decides a preferred proxy home agent from said plurality of second home agents as said delegation target; and
means, by which a home agent currently managing a binding cache entry of said mobile node transmits said binding cache entry to said proxy home agent decided as said delegation target.

9. A home agent in a communication system where a first home agent, being disposed in a home domain and holding a binding cache entry of a mobile node, and a plurality of second home agents, each capable to operate as a proxy of said first home agent, are overlaid on an existing network, said home agent being said first home agent, wherein:
when said mobile node transmits a binding update message in case said mobile node is connected to said second home agent, said first home agent comprises:
means for receiving said binding update message;
means for checking said received binding update message, for deciding a preferred proxy home agent from said plurality of second home agents, for transmitting said binding cache entry which is managed by itself to said proxy home agent, and for transmitting an acknowledgement message to said mobile node; and
when said mobile node is re-connected to a second home agent of move destination different from said proxy home agent, said first home agent transmits a binding update message to said proxy home agent, said proxy home agent checks said binding update message, decides said second home agent of move destination as a new proxy home agent, transmits said binding cache entry which is managed by said proxy home agent to said new proxy home agent, and transmits an acknowledgment message to said mobile node.

10. A home agent in a communication system where a first home agent, being disposed in a home domain and holding a binding cache entry of a mobile node, and a plurality of second home agents, each capable to operate as a proxy of said first home agent, are overlaid on an existing network, said home agent being said second home agent, wherein:
in case said mobile node is connected to said home agent, said home agent comprises means for transmitting a binding update message to said first home agent, for checking said binding update message, for deciding itself as a preferred proxy home agent from said plurality of second home agents, and for transmitting said binding cache entry which is managed by said first home agent, and in case an acknowledgment message is transmitted to said mobile node, said second home agent has means for receiving said binding cache entry and for serving as said proxy home agent; and
when said mobile node is re-connected to a second home agent with move destination different from said proxy home agent, said mobile node transmits a binding update message to said proxy home agent, said proxy home agent checks said binding update message, decides itself as said second home agent of move destination and as a new proxy home, transmits said binding cache entry which is managed by said proxy home agent, and an acknowledgment message is transmitted to said mobile node, said second home agent has means for receiving said binding cache entry and for serving as said new proxy home agent.

11. A mobile node in a communication system where a first home agent, being disposed in a home domain and holding a binding cache entry of a mobile node, and a plurality of second home agents, each capable to operate as a proxy of said first home agent, are overlaid on an existing network, wherein:
when said mobile node is connected to said second home agent, said mobile node has means for transmitting a binding update message to said first home agent;
when said first home agent checks said binding update message, decides a preferred proxy home agent from said plurality of second home agents, transmits said binding cache entry which is managed by itself to said proxy home agent, and transmits an acknowledgment message to said mobile node, said mobile node has means for receiving said acknowledgement message; and
means for transmitting a binding update message to said proxy home agent; and
when said mobile node is re-connected to a second home agent of move destination different from said proxy home agent, said mobile node has means for transmitting a binding update message to said proxy home agent; and
when said proxy home agent checks said binding update message, decides said second home agent of move destination as a new proxy home agent, transmits said binding cache entry which is managed by said proxy home agent to said new proxy home agent, and transmits an acknowledgment message, said mobile node has means for receiving said acknowledgement message and for transmitting a binding update message to said new proxy home agent.

12. A home agent in a communication system where a first home agent, being disposed in a home domain and holding a binding cache entry of a mobile node, and a plurality of second home agents, each capable to operate as a proxy of said first home agent, are overlaid on an existing network, said home agent being said first home agent, wherein:
when a binding update message is transmitted in case said mobile node is connected to said second home agent, said mobile node has means for receiving said binding update message;
said first home agent has means for checking said received binding update message, for deciding preferred proxy home agent from said plurality of second home agents, and for transmitting said binding cache entry which is managed by itself to the proxy home agent so that said proxy home agent receives said binding cache entry and transmits an acknowledgment message to said mobile node;
when a binding update message is transmitted in case said mobile node is re-connected to a second home agent of move destination different from said proxy home agent, said first home agent has means for receiving said binding update message; and
said first home agent has means for checking said received binding update message, for deciding said second home agent of move destination as a new proxy home agent, and for transmitting said binding cache entry under which is managed by itself to said new proxy home agent so that said proxy home agent receives said binding cache entry and transmits an acknowledgment message to said mobile node.

13. A home agent in a communication system where a first home agent, being disposed in a home domain and holding a binding cache entry of a mobile node, and a plurality of second home agents, each capable to operate as a proxy of said first home agent, are overlaid on an existing network, said home agent being said second home agent, wherein:
in case said mobile node is connected to said second home agent and when a binding update message is transmitted to said first home agent, said first home agent checks said binding update message and decides itself as a preferred proxy home agent from said plurality of second home agents, and transmits said binding cache entry which is managed by said first home agent, said second home agent has means for receiving said binding cache entry and serving as a proxy home agent, and for transmitting an acknowledgment message to said mobile node; and
when said mobile node is re-connected to a second home agent of move destination different from said second home agent of move source, said mobile node transmits a binding update message to said first home agent, said first home agent checks said binding update message and decides itself as a new proxy home agent as said second home agent of move destination, and transmits said binding cache entry which is managed by said first home agent, and said second home agent has means for receiving said binding cache entry, for serving as said new proxy home agent, and for transmitting an acknowledgment message to said mobile node.

14. A home agent in a communication system where a first home agent, being disposed in a home domain and holding a binding cache entry of a mobile node, and a plurality of second home agents, each capable to operate as a proxy of said first home agent, are overlaid on an existing network, said home agent being said first or second home agent, wherein said home agent has:
means for acquiring an access network information useful for determining a delegation target of home agent from an access network where said mobile node is connected, for receiving a binding update message transmitted when said mobile node is connected to said second home agent, and for receiving said access network information;
means for checking said binding update information and said access network information, and for deciding a preferred proxy home agent from said plurality of second home agents; and
means for controlling transmission of said binding cache entry from a home agent currently controlling a binding cache entry of said mobile node to said proxy home agent determined as said delegation target.

15. A mobile node in a communication system where a first home agent, being disposed in a home domain and holding a binding cache entry of a mobile node, and a plurality of second home agents, each capable to operate as a proxy of said first home agent, are overlaid on an existing network, wherein said mobile node has:
means for acquiring an access network information useful for determining a delegation target of home agent from an access network where said mobile node is connected; and
means for transmitting said access network information together with a binding
update message to an arbitrary node belonging to an overlaid network.
